# EUROPEAN PATENT SPECIFICATION

(11) **EP 1 975 947 B1**
(45) Date of publication and mention of the grant of the patent: **06.10.2010**
(21) Application number: 06833743.5
(22) Date of filing: 30.11.2006
(51) Int. Cl.: H01B 1/06, H01M 8/02, H01M 8/10

(54) **ELECTROLYTE MEMBRANE AND FUEL CELL USING SAME**
ELEKTROLYTMEMBRAN UND BRENNSTOFFZELLE DAMIT
MEMBRANE ELECTROLYTIQUE ET PILE A COMBUSTIBLE L'UTILISANT

(30) Priority: 30.11.2005 JP 2005345934
(43) Date of publication of application: 01.10.2008
(73) Proprietor: Nippon Sheet Glass Company, Limited, Tokyo 108-6321 (JP)
(72) Inventor: INO, Juichi, Tokyo 1086321 (JP); ASADA, Atsushi, Tokyo 1086321 (JP); ABE, Yoshihiro, Nisshin-shi, Aichi 4700116 (JP)
(74) Representative: Hart-Davis, Jason
(86) International application number: PCT/JP2006/323940
(87) International publication number: WO 2007/063943

(56) References cited:
- EP-A- 1 400 986
- EP-A- 1 953 765
- JP-A- 10 069 817
- JP-A- 2003 520 412
- JP-A- 2004 285 458
- JP-A- 2006 185 919

## Description

### Technical Field

The present invention relates to an electrolyte membrane having ion conductivity, particularly proton conductivity, and a fuel cell using this electrolyte membrane.

### Background Art

Fuel cells feature a high power generation efficiency and a small adverse impact on the environment. Among the fuel cells, polymer electrolyte fuel cells (PEFC) using, as an electrolyte membrane, a polymer membrane having proton conductivity (polymer electrolyte membrane) are high-power and easily can be reduced in size and weight. In addition, it is possible to expect economies of scale in the production of the fuel cells to effect a reduction in the cost thereof. Because of these advantages, PEFC is expected to serve as a small-sized onsite power source as well as power sources for automobiles and mobile devices.

At present, a typical example of such a polymer electrolyte membrane (proton conductive polymer membrane) used for PEFC is a membrane of fluoropolymer having perfluoroalkylene as the principal skeleton, and perfluorovinyl ether as the side chains with ion-exchange groups such as a sulfonic acid group and a carboxylic acid group being located at the terminals thereof. An example of such a fluoropolymer is a Nafion (registered trademark) (manufactured by DuPont). It is believed that the protons in water contained in a fluoropolymer membrane contribute to the proton conductivity of the membrane. This fluoropolymer membrane has, however, a problem of the water being lost from the membrane under the high-temperature (100°C or higher, for example) and non-humidified operating conditions, thereby deteriorating its proton conductivity.

In order to solve this problem and ensure the operability of a fuel cell even under the high-temperature and non-humidified conditions, the use of inorganic proton conductors has been attempted.

For example, JP 2003-151580 A (Reference 1) discloses an inorganic electrolyte membrane in which particles of an inorganic proton conductive oxide (typified by hydrated antimony oxide) having a very small diameter of 5 to 50 nm are introduced into a matrix made of inorganic oxides (such as ZrO₂, SiO₂, TiO₂ and Al₂O₃) that ensure the mechanical properties such as a strength of the membrane. The electrolyte membrane of Reference 1 can be formed by hydrolysis and polycondensation of a mixed solution of an organic compound of metallic elements that constitute the matrix and inorganic proton conductive oxides.

JP 2003-276721 A (Reference 2) discloses an electrolyte membrane obtained by curing a composition including polyorganosiloxane having silanol groups, a nonaqueous inorganic solid acid as an inorganic proton conductor, and a silane coupling agent for chemically bonding the polyorganosiloxane and the nonaqueous inorganic solid acid. The electrolyte membrane of Reference 2 has a structure in which nonaqueous inorganic solid acid microparticles are dispersed in a matrix formed by hydrolysis and polycondensation of polyorganosiloxane. Examples of a nonaqueous inorganic solid acid include at least one selected from the group consisting of CsHSO₄, Cs₂(HSO₄)(H₂PO₄), Rb₃H(SeO₄)₂, (NH₄)₃H(SO₄)₂, and K₃H(SO₄)₂. Judging from the curing temperatures (70°C and 150°C) of the composition described in the example of Reference 2, it is considered that organic substances derived from polyorganosiloxane remain in the matrix.

JP 2004-296274 A (Reference 3) discloses an inorganic electrolyte made of a SiO₂-P₂O₅-based composition including ZrO₂. This electrolyte is formed by gelling a sol formed by hydrolysis of metallic alkoxides including Si, Zr and P, and then baking the resultant gel at 200°C or higher.

JP 2005-294245 A (Reference 4) discloses SnP₂O₇ (a part of Sn may be substituted with Ti) as an inorganic proton conductor of the high-temperature and non-humidified type. This conductor is formed by mixing tin dioxide or tin dioxide hydrate with phosphoric acid so that they react with each other at 150°C to 450°C, and then heat-treating the mixture at 500°C or higher.

EP 1953765 A1, which is prior art under Art. 54 (3) EPC, shows that a proton conductive material contains the element of calcium, the element of sulfur and the element of hydrogen, respectively, and P is an amount of not less thatn 0.1 % by weight and not more than 50 % by weight calculated as P₂O₅.

EP 1400986 A1 teaches that for products such as fuel cells, a gel having a dispersion phase comprising a phosphate molecular chains and a dispersion medium comprising water is used.

### Disclosure of Invention

It is an object of the present invention to provide an electrolyte membrane having a structure different from these conventional electrolyte membranes including inorganic proton conductors, as well as having a high ion conductivity even under high-temperature (particularly 100°C or higher) and non-humidified conditions, and a fuel cell using this electrolyte membrane.

An electrolyte membrane of the present invention is defined in claim 1 and includes: a composite oxoacid solid including at least two kinds of oxoacid groups, hydrogen, and at least one element selected from the group consisting of Mg, Ca, Sr and Ba; and a reinforcing material that is included in the solid and improves a mechanical property of the solid. The reinforcing material is made of glass.

An electrolyte membrane may include : a composite oxoacid solid obtained by mixing an oxoacid salt of at least one element selected from the group consisting of Mg, Ca, Sr and Ba with an acid (oxoacid) including an oxoacid group that is different from an oxoacid group included in the salt; and a reinforcing material that is included in the solid and improves a mechanical property of the solid. The reinforcing material is made of glass.

A fuel cell of the present invention includes an anode; a cathode; and an electrolyte membrane that is sandwiched between the anode and the cathode. This electrolyte membrane is the above-described electrolyte membrane of the present invention.

### Brief Description of Drawing

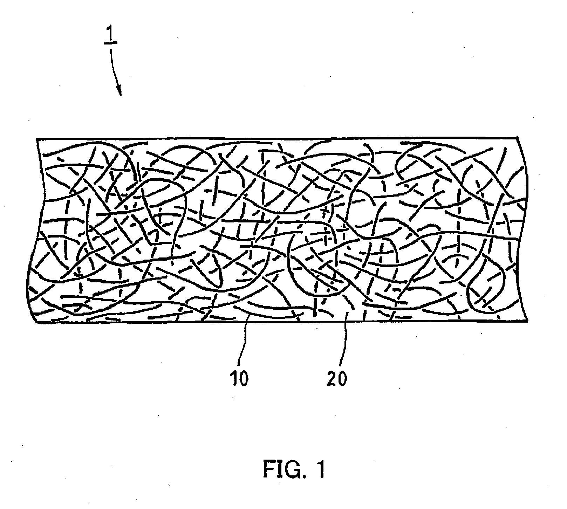

FIG. 1 is a cross sectional view schematically showing one example of an electrolyte membrane of the present invention.

### Best Mode for Carrying Out the Invention

### (Composite Oxoacid Solid)

An electrolyte membrane of the present invention is defined in claim 1 and includes, as an ion conductor (proton conductor), a composite oxoacid solid including at least two kinds of oxoacid groups, hydrogen, and at least one element selected from the group consisting of Mg, Ca, Sr and Ba. This solid is an inorganic electrolyte, and has a high ion conductivity (proton conductivity) even under high-temperature (particularly at 100°C or higher) and non-humidified conditions. Therefore, the electrolyte membrane of the present invention can exhibit a high ion conductivity even under high-temperature and non-humidified conditions. By using this electrolyte membrane, it is possible to realize a fuel cell, for example, having a stable power generation performance at higher operating temperatures than ever before.

Although it is not clear why the above-mentioned solid has a high ion conductivity under high-temperature and non-humidified conditions, it is considered that one of the reasons is that this solid includes at least two kinds of oxoacid groups. More specifically, such a high ion conductivity may be attributable to the following mechanism, for example. Each kind of oxoacid group has its own molecular structure and ionic radius. The ion conductor includes at least two kinds of oxoacid groups, which produces an ion mixing effect, thereby exhibiting an ion conductivity even in a higher temperature range. The composite oxoacid solid also can be said to be a composite oxoacid salt. Focusing attention on its inclusion of at least two kinds of oxoacid groups, the solid of the present invention also can be said to be a certain kind of "double salt."

Although the kinds of oxoacid groups included in the solid are not particularly limited, they are preferably at least two of oxoacid groups that generally are regarded as "strong" acid groups, such as a sulfonic acid group, a phosphoric acid group, a carbonic acid group, a tungstic acid group, a phosphinic acid group, and a nitric acid group. More preferably, they are at least two of a sulfonic acid group, a phosphoric acid group, a carbonic acid group, and a tungstic acid group. It is further preferable that the solid include, as oxoacid groups, a sulfonic acid group and a phosphoric acid group.

As for the content of one kind of oxoacid group to the total amount of the oxoacid groups included in the solid, it is 70% or less in mole fraction, and more preferably 60% or less. The content exceeding 70 mol% results in insufficiency in the ion mixing effect as described above, which may decrease the ion conductivity of the solid, that is, the ion conductivity of the electrolyte membrane.

In the case where two kinds of oxoacid groups are included in the solid, the content of each of these oxoacid groups preferably is 30 to 70 mol% relative to the total amount of the oxoacid groups included in the solid. More preferably, the content is 40 to 60 mol%, and most preferably, it is on the order of 50 mol%, that is, almost the same numbers of respective kinds of oxoacid groups are included in the solid.

The contents can be controlled by, for example, adjusting the mixing molar ratios of an oxoacid and an oxoacid salt that are starting materials for producing a solid by a producing method as described later.

The solid included in the electrolyte membrane of the present invention includes hydrogen and at least one element (element A) selected from the group consisting of Mg, Ca, Sr and Ba in addition to oxoacid groups. Hydrogen is an element necessary for the solid to form a composite oxoacid. The element A that is at least one element selected from the group consisting of Mg, Ca, Sr and Ba is an element necessary for the solid to exhibit a high ion conductivity under the high-temperature and undried conditions. For example, in the case where the composite oxoacid includes an alkali metal element instead of the at least one element, it is considered that such a composite oxoacid is difficult to be used as an ion conductor because the alkali metal element conceivably is transported together with protons.

Due to its contribution to a high ion conductivity, the at least one element A included in the solid preferably is at least one element selected from the group consisting of Mg, Ca and Ba, and more preferably at least one element selected from the group consisting of Ca and Ba.

The combination of oxoacid groups and the elements A in the solid is not particularly limited. Examples thereof include: Mg - sulfonic acid group - phosphoric acid group; Ca - sulfonic acid group - phosphoric acid group; Ba - sulfonic acid group - phosphoric acid group; Mg - sulfonic acid group - nitric acid group; Ca - sulfonic acid group - nitric acid group; Ba - sulfonic acid group - nitric acid group; Mg - sulfonic acid group - tungstic acid group; Ca - sulfonic acid group - tungstic acid group; Ba - sulfonic acid group - tungstic acid group; Mg - nitric acid group - phosphoric acid group; Ca - nitric acid group - phosphoric acid group; Ba - nitric acid group - phosphoric acid group; Mg - tungstic acid group - phosphoric acid group; Ca - tungstic acid group - phosphoric acid group; and Ba - tungstic acid group - phosphoric acid group.

Among them, Mg - sulfonic acid group - phosphoric acid group, Ca - sulfonic acid group - phosphoric acid group, and Ba - sulfonic acid group - phosphoric acid group are preferred due to their contribution to a high ion conductivity.

In the case where the solid is produced by the producing method as described later, the solid contains water of constitution therein, and is not nonaqueous.

### (Reinforcing Materials)

An electrolyte membrane of the present invention includes a reinforcing material that is included in the solid and improves the mechanical property (for example, mechanical strength typified by tensile strength) of the solid. The use of this reinforcing material allows an electrolyte membrane to have excellent dimensional stability, ease of handling and durability. The use of a certain type of a reinforcing material allows an electrolyte membrane to be thinner. Thinner electrolyte membranes are useful for miniaturization and improvement in power generation efficiency of fuel cells, for example.

In the electrolyte membrane of the present invention, a reinforcing material is included in the solid, which is completely different in structure from an electrolyte membrane as disclosed in References 1 and 2, in which inorganic proton conductive microparticles are dispersed inside a reinforcing material that is a matrix. This difference in structure results from the difference in ion conduction mechanism between these electrolyte membranes. For example, in the electrolyte membrane of the present invention, ions are transported through continuously-connected solids, whereas in the electrolyte membranes disclosed in References 1 and 2, it is considered that ions are transported by ion hopping from one microparticle to another over non-ion-conductive reinforcing material that is present between the microparticles (as for hopping, see paragraph [0012] of Reference 2).

In the electrolyte membrane of the present invention, the entire reinforcing material included in the electrolyte membrane need not be completely contained, for example, embedded in the solid. For example, a reinforcing material such as fibers and a nonwoven fabric may be exposed on the surface of the solid.

Although the shape of the reinforcing material is not particularly limited as long as it is included in the solid, it may be fibrous or flaky, for example. A fibrous reinforcing material may be included in the solid in such a manner that respective fibers are dispersed therein, or it may be included in the solid in the form of a woven fabric or a nonwoven fabric.

Generally, a reinforcing material made of an inorganic material is superior in heat resistance to a reinforcing material made of a polymer material. Therefore, in the case where a reinforcing material is made of an inorganic material, it is possible to obtain an electrolyte membrane that is stable in its mechanical properties even under a higher temperature condition.

In the case where a reinforcing material is made of an inorganic material, it is also possible to obtain an electrolyte membrane that is substantially free from an organic substance. In this case, the electrolyte membrane can be stable in its mechanical properties under a still higher temperature condition.

For a reinforcing material, glass is stable particularly to acid. In addition, the use of glass allows an increase in flexibility in shape of a reinforcing material.

Although a glass composition to be used for a reinforcing material is not particularly limited, it preferably is a C-glass composition that is highly stable particularly to acid. The following Table 1 shows the C-glass composition as well as the E-glass composition that is a typical glass composition. Table 1 also shows the more preferable C-glass composition. Each of the glass compositions shown in Table 1 further may include a trace component not shown in Table 1, as long as it does not considerably decrease the stability to acid and it does not adversely affect the ion conductivity of an electrolyte membrane.

**Table 1**

| Component | E-glass | C-glass | Preferred C-glass |
|---|---|---|---|
| | (mass%) | (mass%) | (mass%) |
| SiO₂ | 52 to 56 | 60 to 75 | 63 to 72 |
| Al₂O₃ | 12 to 16 | 1 to 9 | 1 to 7 |
| CaO | 16 to 25 | 2 to 13 | 4 to 11 |
| MgO | 0 to 6 | 0 to 7 | 0 to 5 |
| B₂O₃ | 5 to 13 | 0 to 10 | 0 to 8 |
| R₂O (*1) | 0 to 2 | 7 to 21 | 9 to 19 |
| TiO₂ | 0 to 1.5 | -(*2) | - |
| Fe₂O₃ | 0.05 to 0.5 | 0 to 0.5 | 0 to 0.2 |
| Li₂O | - | 0 to 3 | 0 to 1 |
| ZnO | - | 0 to 8 | 0 to 6 |
| F₂ | 0 to 0.5 | 0 to 3 | 0 to 1 |

| | | | |
|---|---|---|---|
| (*1): R₂O represents the total of Na₂O and K₂O. (*2): In table 1, "-" generally indicates no inclusion or inclusion of a trace amount. | | | |

The reinforcing material is made of glass fibers. The glass fibers that serve as a reinforcing material may be included in the solid in such a manner that respective fibers are dispersed therein, or it may be included in a solid in the form of a woven fabric or a nonwoven fabric.

When a fibrous polymer material or a fibrous inorganic material is used as a reinforcing material, the average fiber diameter thereof preferably is in a range of 0.1 to 20 µm. When the average fiber diameter is less than 0.1 µm, the production cost of a reinforcing material, that is, the production cost of an electrolyte membrane is extremely high, which is not suitable for commercial use. On the other hand, when the average fiber diameter exceeds 20 µm, it becomes difficult to form a uniform and flat electrolyte membrane having a thickness of 50 µm or less.

When the average aspect ratio is less than 50, the reinforcing effect of a material cannot be obtained sufficiently in some cases. On the other hand, when the average aspect ratio exceeds 5000, it becomes difficult to form a solid in which a reinforcing material is dispersed uniformly when producing an electrolyte membrane.

When a fibrous reinforcing material is not dispersed uniformly in a solid, the mechanical properties of an area of an electrolyte membrane in which the reinforcing material is dispersed sparsely may deteriorate, depending on how sparsely it is dispersed. As a result, in cases such as an application of stress, a defect originating from that area is likely to occur.

When a nonwoven fabric is used as a reinforcing material, the average fiber length of the fibers constituting the nonwoven fabric preferably is in a range of 0.5 to 20 mm. When the average fiber length is less than 0.5 mm, the mechanical strength of the nonwoven fabric as a reinforcing material may deteriorate. On the other hand, when the average fiber length exceeds 20 mm, the dispersibility of the fibers upon formation of the nonwoven fabric may deteriorate. As a result, it becomes difficult to ensure the uniformity in thickness as well as the uniformity in mass per unit area required for a nonwoven fabric. Note that the mass per unit area of a nonwoven fabric is a volume per unit area of the nonwoven fabric.

When a woven fabric or a nonwoven fabric is used as a reinforcing material, the thickness thereof preferably is 100 µm or less, and more preferably 50 µm or less. The void volume ratio (porosity) of the woven fabric or the nonwoven fabric preferably is in a range of 60 to 98 vol.%. When the void volume ratio exceeds 98 vol.%, the mechanical properties of the electrolyte membrane may deteriorate. On the other hand, when the void volume ratio is less than 60 vol.%, the amount of the solid in an area of the electrolyte membrane in which the reinforcing material is present decreases, which may result in a decrease in ion conductivity of the electrolyte membrane. The void volume ratio preferably is in a range of 80 to 98 vol.%, and more preferably in a range of 90 to 95 vol.%.

When a flaky glass is used as a reinforcing material, the average thickness thereof preferably is in a range of around 0.1 to 20 µm. When the average thickness is less than 0.1 µm, the production cost of the reinforcing material, that is, the production cost of the electrolyte membrane is extremely high, which is not suitable for commercial use. On the other hand, when the average thickness exceeds 20 µm, it becomes difficult to form a uniform and flat electrolyte membrane having a thickness of 50 µm or less.

The average particle diameter thereof preferably is in a range of around 5 µm to 100 µm. When the average particle diameter is less than 5 µm, the reinforcing effect of a material cannot be obtained sufficiently in some cases. On the other hand, when the average particle diameter exceeds 100 µm, a flaky reinforcing material may protrude from the surface of the electrolyte membrane, thereby deteriorating the joining property between electrodes (a cathode and an anode) sandwiching the electrolyte membrane therebetween.

A surface treatment may be applied to a reinforcing material by using a silane coupling agent or the like. In this case, the mechanical properties of the solid, that is, the mechanical properties of an electrolyte membrane can be further improved. In the case of a flaky reinforcing material, it may be granulated by using a binder or the like.

The electrolyte membrane of the present invention may include both a reinforcing material made of a polymer material and a reinforcing material made of an inorganic material. The electrolyte membrane of the present invention also may include at least two kinds of reinforcing materials which are different in shape.

A material having ion conductivity (proton conductivity) may be used as a reinforcing material. Examples of such a material include: organic polymers including proton conductivity providing agent disclosed in JP 2001-35509 A, JP 06(1994)-111827 A, JP 2000-90946 A, JP 2001-213987 A, JP 2003-192380 A, JP 2005-294218 A, and the like; a silica-dispersed perfluorosulfonate membrane; an organic-inorganic composite membrane (for example, a phosphosilicate-based electrolyte membrane); a phosphate-doped graft membrane; a phosphate glass including water and hydrogen ions; and an electrolyte having a main chain of quinone structure as well as a functional group capable of delocalizing protons.

### (Electrolyte Membranes)

The structure of the electrolyte membrane of the present invention is not particularly limited as long as it includes the composite oxoacid solid and the reinforcing material described above and the reinforcing material is included in the solid.

Although the amounts of the solid and reinforcing material included in the electrolyte membrane of the present invention are not particularly limited, the volume ratio between the solid and the reinforcing material preferably is in a range of 98:2 to 60:40. When the volume fraction of the reinforcing material in the electrolyte membrane exceeds 40%, the ion conductivity of the electrolyte membrane may deteriorate. On the other hand, when the volume fraction thereof is less than 2%, the mechanical properties of the electrolyte membrane may be insufficient.

In the electrolyte membrane of the present invention, a composite oxoacid solid that is an inorganic material serves as an ion conductor. The electrolyte membrane can exhibit a high ion conductivity of, for example, 0.01 (S/cm) or more, or 0.02 (S/cm) or 0.03 (S/cm) or more in some cases, even under the high-temperature (100°C or higher, for example) and non-humidified conditions.

The electrolyte membrane of the present invention may include arbitrary materials in addition to the solid and reinforcing material, unless they seriously damage the functions of the electrolyte membrane. For example, the voids of a solid or a reinforcing material may be filled with a substance having ion conductivity (proton conductivity). Such a substance is, for example, a molten salt that has a relatively high melting point and is liquid at room temperature. Examples of a cation that constitutes this molten salt include tetraalkylammonium, N,N-dialkylammonium-heterocyclic, 1,3-dialkylimidazolium, and N-alkylpyridinium. Examples of an anion that constitutes this molten salt include chlorinated aluminum, tetrafluoroboric acid (BF4), hexafluorophosphate (PF6), trifluoromethanesulfate, bis(trifluoromethanesulfonyl)imide (TFSI). Generally, a molten salt made of any of these cations and anions has a high polarity, an extremely low vapor pressure (nonvolatile), as well as an excellent heat stability, electrochemical stability and ion conductivity.

### (Producing Method of Electrolyte Membrane)

Although the producing method of the electrolyte membrane of the present invention is not particularly limited, it can be produced by the following method, for example.

A composite oxoacid solid can be formed by mixing an oxoacid salt of at least one element selected from the group consisting of Mg, Ca, Sr, and Ba with an oxoacid including an oxoacid group different from the oxoacid group included in the oxoacid salt.

It is preferable to use a powdered oxoacid salt when mixing the oxoacid salt and the oxoacid.

When a powdered oxoacid salt is used, immediately after mixing with an oxoacid, the resultant mixture is a paste that freely can be changed in shape. This mixture becomes solidified over time to turn into a composite oxoacid solid.

The electrolyte membrane can be formed by composing both the pasty mixture or the composite oxoacid solid thus formed and a reinforcing material made of a polymer material or an inorganic material in such a manner that the reinforcing material is included in the resultant mixture or the composite oxoacid solid.

Although the composition method is not particularly limited, the composition can be carried out in the following manner, for example. A pasty mixture formed by mixing the oxoacid salt and oxoacid is deformed into a sheet as a composite oxoacid solid sheet. A polymer material as a solution or a dispersion is impregnated into this solid sheet, and then the solution or the solvent of the dispersion (dispersion solvent) is removed by drying or the like. Thus the reinforcing material made of a solid polymer material included in the solid sheet is formed. It should be noted that in order to form a composite oxoacid solid sheet including a reinforcing material therein, a technique such as heating and pressurization can be used as needed. For example, when deforming a mixture into a sheet, a pressurization means such as a press may be used. When removing a solvent, heating may be used together with pressurization.

Another example of the composition method is as follows. The pasty mixture formed as described above is mixed with a fibrous or flaky reinforcing material, and then the resultant mixture is formed into a sheet, which is solidified. Thus a composite oxoacid solid including the reinforcing material therein can be formed.

Still another example of the composition method is as follows. When a woven fabric or a nonwoven fabric is used as a reinforcing material, the woven fabric or the nonwoven fabric is mixed with the pasty mixture formed as described above in such a manner that the voids of the fabric are filled with the mixture, and then the resultant mixture is solidified. Thus a composite oxoacid solid including the reinforcing material therein can be formed.

The composite oxoacid solid including a reinforcing material therein may be used as an electrolyte membrane without modification, or an arbitrary component may be placed on the surface thereof as needed.

FIG. 1 shows one example of an electrolyte membrane of the present invention that includes glass fibers as a reinforcing material. An electrolyte membrane 1 shown in FIG. 1 includes: a composite oxoacid solid 20 including at least two kinds of oxoacid groups, hydrogen, and at least one element selected from the group consisting of Mg, Ca, Sr and Ba; and glass fibers 10 that serve as a reinforcing material included in the solid 20.

### (Fuel Cell)

The fuel cell of the present invention includes an anode, a cathode, and the electrolyte membrane of the present invention that is sandwiched between the anode and the cathode. The fuel cell of the present invention can have stable power generation performance at a higher operating temperature compared with the fuel cells including the conventional electrolyte membranes.

As for the portions other than the electrolyte membrane in the fuel cell of the present invention, common components can be used as components that constitute the fuel cell. A preferable example of the fuel cell of the present invention is a fuel cell in which an electrolyte membrane for a well-known polymer electrolyte fuel cell is substituted with the electrolyte membrane of the present invention. In this case, the materials and configuration of the well-known polymer electrolyte fuel cell can be applied without modification to the portions other than the electrolyte membrane. Therefore, this type of fuel cell can be produced by the well-known method except for the production method of the electrolyte membrane.

### Examples

Hereinafter, the present invention will be described more specifically by using examples. The present invention is not limited to the following examples.

### (Example 1)

As a reinforcing material, short glass fibers having a glass composition shown in the following Table 2 (C-glass composition) were prepared. The average fiber diameter of these short glass fibers was about 0.8 µm, and the average aspect ratio was about 1000 (the average fiber length was about 0.8 mm).

**Table 2**

| Component | Content (mass%) |
|---|---|
| SiO₂ | 65 |
| Al₂O₃ | 4 |
| CaO | 7 |
| MgO | 3 |
| B₂O₃ | 5 |
| R₂O (*1) | 12 |
| Li₂O | 0.5 |
| ZnO | 3.5 |

| | |
|---|---|
| (*1): R₂O represents the total of Na₂O and K₂O. | |

Next, CaSO₄, i.e. Ca sulfonate (calcined gypsum for reagents CaSO₄·l/2H₂O manufactured by Wako Pure Chemical Industries, Ltd.), and a H₃PO₄ aqueous solution (concentration of 85 mass%), i.e. an oxoacid including an oxoacid group different from a sulfonic acid group, were mixed in such a manner that the number of moles of CaSO₄ was equal to that of H₃PO₄. Thus a pasty mixture was formed. When mixing CaSO₄ and H₃PO₄, pure water was added as appropriate so that the mixture turned into paste.

Next, a reinforcing material made of the short glass fibers was added to the mixture thus formed, which were stirred and mixed well. The amount of the added reinforcing material was 5% by volume to the total amount of the mixture of both (the pasty mixture and short glass fibers).

By further stirring this mixture, a reaction between CaSO₄ and H₃PO₄ proceeds, so that the mixture is solidified to form a composite oxoacid solid (including a sulfonic acid group and a phosphoric acid group that are oxoacid groups, as well as Ca and H). So, the mixture with the short glass fibers being added thereto was applied to a flat surface of a tray before the mixture was completely solidified, which then was heated at 120°C for 2 hours or more for solidification. Thereafter, the entire solid was hot-pressed at 120°C and with a pressure of 10 MPa by using a hot-pressing machine. Thus a sheet-like electrolyte membrane (with a thickness of 25 µm) in which the short glass fibers as a reinforcing material are dispersed was obtained.

### (Example 2)

A pasty mixture was formed by mixing CaSO₄ and H₃PO₄ in the same manner as in Example 1.

Next, the short glass fibers prepared in Example 1 and a polymer material that is a dispersion of fluororesin microparticles (POLYFLON (registered trademark) TFED-2 manufactured by Daikin Industries, Ltd.) were added to the mixture thus formed, which were stirred and mixed well. The amounts of the added short glass fibers and polymer material were 5% by volume respectively to the total amount of the mixture of these three materials (the pasty mixture, short glass fibers and polymer material).

By further stirring this mixture, a reaction between CaSO₄ and H₃PO₄ proceeds, so that the mixture is solidified to form a composite oxoacid solid (including a sulfonic acid group and a phosphoric acid group that are oxoacid groups, as well as Ca and H). So, the mixture with the short glass fibers and the polymer material being added thereto was applied to a flat surface of a tray before the mixture was completely solidified, which were then heated at 120°C for 2 hours or more for solidification. Thereafter, the entire solid was hot-pressed at 120°C and with a pressure of 10 MPa by using a hot-pressing machine. Thus a sheet-like electrolyte membrane (with a thickness of 25 µm) in which the short glass fibers and the polymer material as reinforcing materials are dispersed was obtained.

### (Example 3)

A nonwoven fabric made of glass fibers having the glass composition shown in Table 2 (C-glass composition) was prepared as a reinforcing material. Specifically, short glass fibers having the glass composition (with 0.8 µm in average diameter and approximately 3 mm in average length) were put into a pulper for untangling the fibers, and were dissociated and dispersed sufficiently in an aqueous solution adjusted to pH 2.5 with sulfuric acid. As a result, a glass fiber slurry for paper making was prepared. The slurry thus prepared was fed to a wet type paper machine, so that a glass fiber nonwoven fabric that is a reinforcing material was prepared. The nonwoven fabric thus prepared was 30 µm in thickness and about 5 g/m² in mass per unit area.

Aside from the preparation of the reinforcing material, CaSO₄ and H₃PO₄ were mixed in the same manner as in Example 1 so as to form a pasty mixture.

Next, the nonwoven fabric prepared as described above was put on a flat surface of a tray and the pasty mixture was poured thereon to cover the entire fabric so that the voids of the nonwoven fabric were filled with the mixture and thereby the nonwoven fabric was included in the mixture. Thereafter, the entire tray was heated at 120°C for 2 hours or more, so that the above-mentioned mixture was solidified to form a composite oxoacid solid, and then the entire solid was hot-pressed at 120°C and with a pressure of 10 MPa by using a hot-pressing machine. In this manner, a sheet-like electrolyte membrane (with a thickness of 25 µm) including a glass fiber nonwoven fabric as a reinforcing material was obtained. The content of the nonwoven fabric included in the electrolyte membrane was about 5 vol.%.

### (Example 4)

In Example 4, the electrolyte membrane prepared in Example 1 was impregnated with an ion conductive substance.

Specifically, 2.6 parts by mass of tetraethoxysilane, 5 parts by mass of orthophosphoric acid, 9 parts by mass of epoxysilane, 11.7 parts by mass of ethanol, and 2.7 parts by mass of pure water were mixed and stirred for 2 hours. Thereby, phosphosilicate sol was prepared as an ion conductive substance.

Next, the prepared sol was poured on a tray, and the electrolyte membrane prepared in Example 1 was immersed in the sol so that the electrolyte membrane was impregnated with the sol. Thereafter, the resultant membrane was dried at 50°C for 24 hours, then dried at 100°C for 6 hours, and further subjected to heat treatment at 150°C for 6 hours. Thereby, an electrolyte membrane containing about 0.05 vol.% of phosphosilicate gel was formed.

Next, the electrolyte membrane thus formed was hot-pressed at 120°C and with a pressure of 10 MPa by using a hot-pressing machine. In this manner, an electrolyte membrane (with a thickness of 25 µm) in which short glass fibers that serve as a reinforcing material were dispersed was obtained.

### (Example 5)

In Example 5, the surface of the nonwoven fabric prepared in Example 3 was coated with phosphosilicate gel by using the phosphosilicate sol prepared in Example 4, and thereby a reinforcing material was obtained.

Specifically, phosphosilicate sol was poured on a tray, and the nonwoven fabric prepared in Example 3 was immersed in the sol. Thereafter, the resultant nonwoven fabric was dried at 50°C for 24 hours, then dried at 100°C for 6 hours, and further subjected to heat treatment at 150°C for 6 hours. Thereby, a nonwoven fabric with the surface coated with phosphosilicate gel was formed.

Next, by using the nonwoven fabric formed as described above, a sheet-like electrolyte membrane (with a thickness of 25 µm) including glass fiber nonwoven fabric as a reinforcing material was obtained in the same manner as in Example 3.

### (Conventional Example)

An isopropyl alcohol solution of a fluoropolymer electrolyte (Nafion DE2020 (manufactured by DuPont)) that had been used widely as a conventional proton conductor was applied to a flat surface of a tray, and was dried at room temperature for 8 hours or more and at 120°C for 1 hour. Thereby, a sheet-like polymer electrolyte membrane (with a thickness of 25 µm) was obtained.

### (Tensile Strength Measurement)

The tensile strength of each of the sheet-like electrolyte membranes prepared in Examples 1 through 5 and Conventional Example was evaluated.

The electrolyte membrane was cut to form a test sample of about 20 mm in width and about 80 mm in length. The sample was pulled by using Universal Tensile Tester (with a distance between chucks of 30 mm and a speed of 10 mm/minute), and a maximum load (N) at rupture was measured. This measured value was divided by measured values of the thickness and width of the sample so that the tensile strength (MPa) of each electrolyte membrane was evaluated. The thickness of the sample was measured with a micrometer.

### (Ion Conductivity Evaluation)

The ion conductivity of each of the sheet-like electrolyte membranes prepared in Examples 1 through 5 and Conventional Example was evaluated. By using an impedance analyzer, the ion conductivity was measured in a non-humidified atmosphere by anAC 4-probe method. The measurements were carried out at 25°C and 200°C.

These evaluation results are shown in Table 3.

**Table 3**

| Sample | Tensile strength | Ion conductivity [S/cm] | |
|---|---|---|---|
| | [MPa] | 25°C | 200°C |
| Example 1 | 10 | 3 × 10⁻² | 3 × 10⁻² |
| Example 2 | 11 | 2 × 10⁻² | 2 × 10⁻² |
| Example 3 | 13 | 3 × 10⁻² | 3 × 10⁻² |
| Example 4 | 12 | 3 × 10⁻² | 2 × 10⁻² |
| Example 5 | 17 | 3 × 10⁻² | 2 × 10⁻² |
| Conventional Example | 6 | 3 × 10⁻² | 0 |

As shown in Table 3, when the measurement was carried out at 25°C, the electrolyte membranes of Examples 1 through 5 showed the ion conductivities in the range of 2 × 10⁻² (S/cm) to 3 × 10⁻² (S/cm), which were approximately equal to the ion conductivity of Nafion of Conventional Example. In addition, even when the measurement was carried out at 200°C, the electrolyte membranes of Examples 1 through 5 still showed the ion conductivities that were approximately equal to those measured at 25°C, while Nafion of Conventional Example did not show the ion conductivity at all due to its deterioration.

From a viewpoint of a tensile strength of an electrolyte membrane, these results revealed that the tensile strengths of Examples 1 through 5 were considerably improved compared with Nafion.

### (Example 6)

As a reinforcing material, short glass fibers were prepared in the same manner as in Example 1.

Next, BaWO₄, i.e. Ba tungstate (manufactured by Wako Pure Chemical Industries, Ltd.), and a H₂SO₄ aqueous solution (concentration of 95 mass%), i.e. an oxoacid including an oxoacid group different from a tungstic acid group, were mixed in such a manner that the number of moles of BaWO₄ was equal to that of H₂SO₄. Thus a pasty mixture was formed. When mixing BaWO₄ and H₂SO₄, pure water was added as appropriate so that the mixture turned into paste.

Next, the reinforcing material made of the short glass fibers was added to the mixture thus formed, which were stirred and mixed well. The amount of the added reinforcing material was 5 vol.% relative to the total amount of the mixture of both (the pasty mixture and the short glass fibers).

By further stirring the resultant mixture, a reaction between BaWO₄ and H₂SO₄ proceeds, so that the mixture is solidified to form a composite oxoacid solid (including a sulfonic acid group and a tungstic acid group that are oxoacid groups, as well as Ba and H). So, the mixture with the short glass fibers being added thereto was applied to a smooth surface of a tray before the mixture was completely solidified, which were then heated at 120°C for 2 hours or more for solidification. Thereafter, the entire solid was hot-pressed at 120°C and with a pressure of 10 MPa by using a hot-pressing machine. Thus a sheet-like electrolyte membrane (with a thickness of 25 µm) in which the short glass fibers as a reinforcing material were dispersed was obtained.

As for the sheet-like electrolyte membrane thus obtained, the tensile strength and ion conductivity (at 25°C) were evaluated in the same manner as in Examples 1 through 5, and the results were 10 MPa and 2 × 10⁻² (S/cm), respectively.

### (Example 7)

As a reinforcing material, short glass fibers were prepared in the same manner as in Example 1.

Next, CaCO₃, i.e. Ca carbonate (manufactured by Wako Pure Chemical Industries, Ltd.), and a H₃PO₄ aqueous solution (concentration of 85 mass%), i.e. an oxoacid including an oxoacid group different from a carbonic acid group, were mixed so that the number of moles of CaCO₃ was equal to that of H₃PO₄. Thus a pasty mixture was formed. When mixing CaCO₃ and H₃PO₄, pure water was added as appropriate so that the mixture turned into paste.

Next, the reinforcing material made of the short glass fibers was added to the mixture thus formed, which were stirred and mixed well. The amount of the added reinforcing material was 5 vol.% relative to the total amount of the mixture of both (the pasty mixture and the short glass fibers).

By further stirring the resultant mixture, a reaction between CaCO₃ and H₃PO₄ proceeds, so that the mixture is solidified to form a composite oxoacid solid (including a phosphoric acid group and a carbonic acid group that are oxoacid groups, as well as Ca and H). So, the mixture with the short glass fibers being added thereto was applied to a smooth surface of a tray before the mixture was completely solidified, which then was heated at 120°C for 2 hours or more for solidification. Thereafter, the entire solid was hot-pressed at 120°C and with a pressure of 10 MPa by using a hot-pressing machine. Thus a sheet-like electrolyte membrane (with a thickness of 25 µm) in which the short glass fibers as a reinforcing material were dispersed was obtained.

As for the sheet-like electrolyte membrane thus obtained, the tensile strength and ion conductivity (at 25°C) were evaluated in the same manner as in Examples 1 through 5, and the results were 10 MPa and 1 × 10⁻² (S/cm), respectively.

### (Example 8)

As a polymer material to be used as a reinforcing material, Rikacoat PN-20 (polyimide varnish with a concentration of 20 mass%) (manufactured by New Japan Chemical Co., Ltd.) was used instead of a fluororesin dispersion used in Example 2. First, Rikacoat PN-20 was diluted with N-methyl-2-pyrrolidone, so that a solution with a concentration of 5 mass% was obtained. Next, short glass fibers and the Rikacoat PN-20 diluted with N-methyl-2-pyrrolidone were added in the same manner as in Example 2 to a pasty mixture obtained by mixing CaSO₄ and H₃PO₄ in the same manner as in Example 1, which were stirred and mixed well. The amounts of the added short glass fibers and polymer material were 5 vol.% and 1 vol.% respectively relative to the total amount of the mixture of these three materials (the pasty mixture, short glass fibers and polymer material).

The mixture of the three materials thus prepared was heated at 120°C for 2 hours or more to be solidified in the same manner as in Example 1. Thereafter, the entire solid was hot-pressed at 250°C and with a pressure of 10 MPa by using a hot-pressing machine. Thus a sheet-like electrolyte membrane (with a thickness of 25 µm) was obtained.

As for the sheet-like electrolyte membrane thus obtained, the tensile strength and ion conductivity (at 25°C) were evaluated in the same manner as in Examples 1 through 5, and the results were 12 MPa and 1 × 10⁻² (S/cm), respectively.

### (Comparative Example 1)

Pure water was added to CaSO₄ used in Example 1, which was mixed well to prepare a CaSO₄ paste. By further stirring this paste, CaSO₄ is solidified. So, this paste was applied to a smooth surface of a tray before CaSO₄ was completely solidified, which was then hot-pressed at 120°C and with a pressure of 10 MPa by using a hot-pressing machine at the time when the shape could be maintained because of its solidification. Thus a sheet-like electrolyte membrane (with a thickness of 23 µm) was obtained.

As for the sheet-like electrolyte membrane thus obtained, the tensile strength was evaluated in the same manner as in Examples 1 through 5. However, the tensile strength thereof could not be measured due to its low strength. In addition, the ion conductivity (at 25°C) of this electrolyte membrane was evaluated in the same manner as in Examples 1 through 5. However, the result was 1 × 10⁻⁶ (S/cm), which was a considerably low value compared with the ion conductivity of each of the electrolyte membranes of Examples, and ion conductivity was scarcely seen.

### (Comparative Example 2)

Pure water was added to BaWO₄ used in Example 6, which was mixed well to prepare a BaWO₄ paste. Next, this paste was applied to a flat surface of a tray, which was then dried at 120°C for 2 hours. Thus an electrolyte was obtained. However, the obtained electrolyte was not only difficult to maintain its shape but also impossible to be hot-pressed with a hot-pressing machine.

As for the electrolyte thus obtained, the ion conductivity (at 25°C) was evaluated in the same manner as in Examples 1 through 5. However, the result was 1 × 10⁻¹⁰ (S/cm), which was a considerably low value compared with the ion conductivity of each of the electrolyte membranes of Examples, and ion conductivity was scarcely seen. In addition, since this electrolyte was difficult to maintain its shape, the tensile strength thereof could not be evaluated.

### (Comparative Example 3)

Pure water was added to BaSO₄ (manufactured by Wako Pure Chemical Industries, Ltd.), which was mixed well to prepare a BaSO₄ paste. Next, this paste was applied to a flat surface of a tray, which was then dried at 120°C for 2 hours. Thus an electrolyte was obtained. However, the obtained electrolyte not only tended not to maintain its shape but also was impossible to be hot-pressed with a hot-pressing machine.

As for the electrolyte thus obtained, the ion conductivity (at 25°C) was evaluated in the same manner as in Examples 1 through 5. However, the result was 9 × 10⁻⁹ (S/cm), which was a considerably low value compared with the ion conductivity of each of the electrolyte membranes of Examples, and ion conductivity was scarcely seen. In addition, since this electrolyte was difficult to maintain its shape, the tensile strength thereof could not be evaluated.

### Industrial Applicability

According to the present invention, it is possible to provide an electrolyte membrane that exhibits a high ion conductivity even under high-temperature and non-humidified conditions. In addition, by using this electrolyte membrane, it is possible to realize a fuel cell with a stable power generation performance even at a higher operating temperature than ever before.

## Claims

1. An electrolyte membrane comprising:
a composite oxoacid solid including at least two kinds of oxoacid groups, hydrogen, and at least one element selected from the group consisting of Mg, Ca, Sr and Ba, wherein the content of one kind of the oxoacid groups to the total amount of the oxoacid groups included in the composite oxoacid solid is 70 % or less in mole fraction; and
a reinforcing material that is included in the solid and improves a mechanical property of the solid,
wherein the reinforcing material is made of glass, and
the reinforcing material is fibrous in shape.

2. The electrolyte membrane according to Claim 1,
wherein the solid includes at least two kinds of oxoacid groups, hydrogen, and at least one element selected from the group consisting of Mg, Ca and Ba.

3. The electrolyte membrane according to Claim 1,
wherein the oxoacid groups include at least two of a sulfonic acid group, a phosphoric acid group, a carbonic acid group, a tungstic acid group, a phosphinic acid group, and a nitric acid group.

4. The electrolyte membrane according to Claim 1,
wherein the oxoacid groups include at least two of a sulfonic acid group, a phosphoric acid group, a carbonic acid group, and a tungstic acid group.

5. The electrolyte membrane according to Claim 1,
wherein the solid includes a sulfonic acid group and a phosphoric acid group as the oxoacid groups.

6. The electrolyte membrane according to Claim 1,
wherein the reinforcing material is a glass fiber.

7. The electrolyte membrane according to Claim 1,
wherein the glass has a C-glass composition.

8. A fuel cell comprising:
an anode;
a cathode; and
an electrolyte membrane that is sandwiched between the anode and the cathode,
wherein the electrolyte membrane is the electrolyte membrane according to Claim 1.

## Patentansprüche

1. Elektrolytische Membran umfassend:
einen Verbund-Oxosäure-Feststoff enthaltend wenigstens zwei Arten von Oxosäuregruppen, Wasserstoff und wenigstens ein aus der aus Mg, Ca, Sr und Ba bestehenden Gruppe ausgewähltes Element, wobei der Stoffmengenanteil einer Art der Oxosäuregruppen zur Gesamtmenge der in dem Verbund-Oxosäure-Feststoff enthaltenen Oxosäuregruppen 70% oder weniger ist, und
ein Verstärkungsmaterial, das im Feststoff enthalten ist und die mechanischen Eigenschaften des Feststoffs verbessert,
wobei das Verstärkungsmaterial aus Glas ausgebildet ist und
das Verstärkungsmaterial faserförmig vorliegt.

2. Elektrolytische Membran nach Anspruch 1, wobei der Feststoff wenigstens zwei Arten von Oxosäuregruppen, Wasserstoff und wenigstens ein aus der aus Mg, Ca und Ba bestehenden Gruppe ausgewähltes Element enthält.

3. Elektrolytische Membran nach Anspruch 1, wobei die Oxosäuregruppen wenigstens zwei von einer Sulfonsäuregruppe, einer Phosphorsäuregruppe, einer Carbonsäuregruppe, einer Wolframsäuregruppe, einer Phosphinsäuregruppe und einer Salpetersäuregruppe umfassen.

4. Elektrolytische Membran nach Anspruch 1, wobei die Oxosäuregruppen wenigstens zwei von einer Sulfonsäuregruppe, einer Phosphorsäuregruppe, einer Carbonsäuregruppe und einer Wolframsäuregruppe umfassen.

5. Elektrolytische Membran nach Anspruch 1, wobei der Feststoff eine Sulfonsäuregruppe und eine Phosphorsäuregruppe als Oxosäuregruppen enthält.

6. Elektrolytische Membran nach Anspruch 1, wobei das Verstärkungsmaterial aus Glasfasern besteht.

7. Elektrolytische Membran nach Anspruch 1, wobei das Glas eine C-GlasZusammensetzung besitzt.

8. Brennstoffzelle umfassend:
eine Anode,
eine Kathode und
eine elektrolytische Membran, welche zwischen der Anode und der Kathode eingeklemmt ist,
wobei die elektrolytische Membran die elektrolytische Membran nach Anspruch 1 ist.

## Revendications

1. Membrane électrolytique comprenant :
un solide oxoacide composite incluant au moins deux types de groupes oxoacides, de l'hydrogène, et au moins un élément choisi dans le groupe consistant en Mg, Ca, Sr et Ba, où la teneur d'un type des groupes oxoacides par rapport à la quantité totale des groupes oxoacides indue dans le solide oxoacide composite est 70 % ou moins en fraction molaire ; et
un matériau de renforcement qui est inclus dans le solide et améliore une propriété mécanique du solide,
où le matériau de renforcement est en verre, et
le matériau de renforcement est de forme fibreuse.

2. Membrane électrolytique selon la revendication 1, où le solide inclut au moins deux types de groupes oxoacides, de l'hydrogène, et au moins un élément choisi dans le groupe consistant en Mg, Ca et Ba.

3. Membrane électrolytique selon la revendication 1, où les groupes oxoacides incluent au moins deux d'un groupe acide sulfonique, d'un groupe acide phosphorique, d'un groupe acide carbonique, d'un groupe acide tungstique, d'un groupe acide phosphinique et d'un groupe acide nitrique.

4. Membrane électrolytique selon la revendication 1, où les groupes oxoacides incluent au moins deux d'un groupe acide sulfonique, un groupe acide phosphorique, d'un groupe acide carbonique et d'un groupe acide tungstique.

5. Membrane électrolytique selon la revendication 1, où le solide inclut un groupe acide sulfonique et un groupe acide phosphorique comme groupes oxoacides.

6. Membrane électrolytique selon la revendication 1, où le matériau de renforcement est une fibre de verre.

7. Membrane électrolytique selon la revendication 1, où le verre a une composition de verre C.

8. Pile à combustible comprenant :
une anode ;
une cathode ; et
une membrane électrolytique qui est disposée entre l'anode et la cathode,
où la membrane électrolytique est la membrane électrolytique selon la revendication 1.
